# EUROPEAN PATENT APPLICATION

(11) **EP 4 428 688 A1**
(43) Date of publication of application: **11.09.2024**
(21) Application number: 23208689.2
(22) Date of filing: 09.11.2023
(51) Int. Cl.: G06F 9/50

(54) **METHOD FOR AUTOMATING CLOUD BUILDING**

(30) Priority: 09.03.2023 KR 20230031237; 09.03.2023 KR 20230031249; 31.05.2023 KR 20230069912; 31.05.2023 KR 20230070015
(71) Applicant: Samsung SDS Co., Ltd., Seoul 05510 (KR)
(72) Inventor: Kim, Misook, Seoul 05510 (KR); Park, Jungchul, Seoul 05510 (KR); Kim, Hyengun, Seoul 05510 (KR); Yang, Sooyeon, Seoul 05510 (KR); Yang, Jongsung, Seoul 05510 (KR)
(74) Representative: Grünecker Patent- und Rechtsanwälte PartG mbB

(57) **Abstract**

A method performed in a computing device including a processor and a storage medium in which one or more programs configured to be executable by the processor are written includes receiving configuration information for one of a plurality of processes for building a cloud; and processing one of the processes based on the received configuration information, wherein the plurality of processes includes one or more sub-processes, and wherein the processing one of the processes includes determining whether to process a sub-process included in one of the processes based on the configuration information, and processing a sub-process determined to be processed as a result of the determination.

## Description

### CROSS-REFERENCE TO RELATED APPLICATION(S)

This application claims benefit of priority to Korean Patent Application No. 10-2023-0070015 filed on May 31, 2023, Korean Patent Application No. 10-2023-0069912 filed on May 31, 2023, Korean Patent Application No. 10-2023-0031249 filed on March 9, 2023, and Korean Patent Application No. 10-2023-0031237 filed on March 9, 2023, in the Korean Intellectual Property Office, the disclosures of which are incorporated herein by reference in their entirety.

### BACKGROUND

Example embodiments in the example embodiment relate to a method for automating cloud building.

A cloud is a service of storing software and data in a central computer connected to the Internet, and using data anytime and anywhere by accessing a network.

In the case of newly building a previous infrastructure as a cloud or migrating a previously used cloud to another cloud, most of a processes of general cloud building service has been performed manually. Accordingly, work quality may not be uniform depending on technical skills and proficiency of different workers, which may be problematic.

Also, when requirements of customer change or an error is discovered during work processing, such that a current work may need to be deleted and reworked, there may be a difficulty in that an overall risk of the cloud building project may increase.

### SUMMARY

An example embodiment in the example embodiment is to provide a method for automating cloud building which may uniformly improve overall work quality, may shorten read time, may reduce input manpower and costs, and may reduce a risk caused by correction or change of the work through automation of cloud building work.

According to an example embodiment of the present disclosure, a method performed in a computing device including a processor and a storage medium in which one or more programs configured to be executable by the processor are written includes receiving configuration information for one of a plurality of processes for building a cloud; and processing one of the processes based on the received configuration information, wherein the plurality of processes includes one or more sub-processes, and wherein the processing one of the processes includes determining whether to process a sub-process included in one of the processes based on the configuration information, and processing a sub-process determined to be processed as a result of the determination.

According to an example embodiment of the present disclosure, a computer-readable storage medium in which a program for executing the method on a computer is written may be provided.

### BRIEF DESCRIPTION OF DRAWINGS

The above and other aspects, features, and advantages in the example embodiment will be more clearly understood from the following detailed description, taken in combination with the accompanying drawings, in which:
FIG. 1 is a block diagram illustrating an entire system including an apparatus for automating cloud building according to an example embodiment of the present disclosure;
FIG. 2 is diagram illustrating a cloud building process performed in a method for automating cloud building according to an example embodiment of the present disclosure;
FIG. 3 is a flowchart illustrating a method for automating cloud building according to an example embodiment of the present disclosure;
FIG. 4 is a flowchart illustrating a method for automating cloud building according to an example embodiment of the present disclosure;
FIG. 5 is a flowchart illustrating a flowchart illustrating a cloud configuration process performed in a method for automating cloud building according to an example embodiment of the present disclosure;
FIG. 6 is a flowchart illustrating a flowchart illustrating a software configuration process performed in a method for automating cloud building according to an example embodiment of the present disclosure;
FIG. 7 is a flowchart illustrating an application process performed in a method for automating cloud building according to an example embodiment of the present disclosure;
FIGS. 8A and 8B are flowcharts illustrating a process of data migration performed in a method for automating cloud building according to an example embodiment of the present disclosure;
FIG. 9 is a flowchart illustrating a testing process performed in a method for automating cloud building according to an example embodiment of the present disclosure; and
FIG. 10 is a block diagram illustrating a computing device which may fully or partially implement an apparatus for automating cloud building.

### DETAILED DESCRIPTION

Hereinafter, embodiments in the example embodiment will be described as follows with reference to the accompanying drawings.

Redundant descriptions and detailed descriptions of known functions and elements that may unnecessarily make the gist of the present disclosure obscure will be omitted. Also, terms to be described later may be defined in consideration of functions in the present disclosure, which may vary according to intentions or customs of a user or an operator. Accordingly, the definition should be made based on the descriptions below. The terms herein are provided as mere examples, and are not limited to those set forth herein. Terms such as "first" and "second" may be used in describing various elements, but the above elements shall not be restricted to the above terms. An expression used in the singular encompasses the expression of the plural, unless it has a clearly different meaning in the context. In this description, the terms such as "including" or "comprising" are intended to indicate characteristics, numbers, stages, operations, elements, a portion or combination thereof, and should not be construed to exclude the presence or possibility of one or more other characteristics, numbers, stages, operations, elements, portions or combinations thereof other than those described.

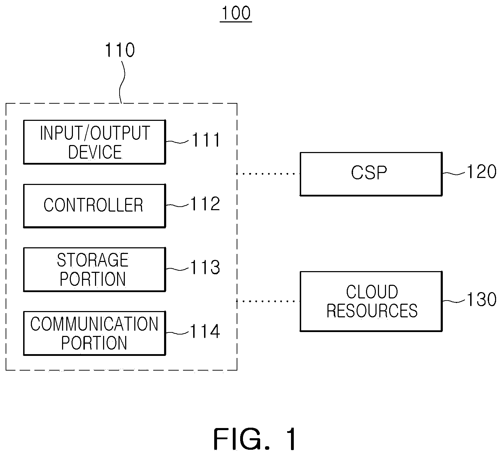

FIG. 1 is a diagram illustrating an entire system 100 including an apparatus 110 for automating cloud building, a cloud service provider (CSP) 120 and cloud resources 130.

The apparatus 110 for automating cloud building may process a plurality of processes included in a cloud building process. The plurality of processes for building a cloud may include one or more sub-processes, and a sub-process may consist of one or more works.

The apparatus 110 for automating cloud building of the present invention may automate cloud building work by processing the entirety or a portion of a cloud building process based on received information.

The CSP 120 may be implemented as a cloud service provider, and the apparatus 110 for automating cloud building may transmit and receive data through the CSP 120 and a network. For example, the apparatus 110 for automating cloud building may request an API to the CSP 120.

The cloud resources 130 may include cloud resources generated in a CSP environment. The apparatus 110 for automating cloud building may transmit and receive data through the cloud resources 130 and a network. The cloud resources 130 may include, for example, at least one of virtual machines (VMs), bare metals (BMs), and databases (DBs).

Referring to FIG. 1, the apparatus 110 for automating cloud building may include an input/output device 111, a controller 112, a storage portion 113 and a communication portion 114.

The input/output device 111 may receive configuration information about a cloud building process. For example, the input/output device 111 may receive configuration information from a user terminal or an external device.

Also, the input/output device 111 may output processing results of the cloud building process. The input/output device 111 may output processing results in a process unit included in the cloud building process, a sub-process unit included in each process, or a work unit included in a sub-process.

The processing result output by the input/output device 111 may be transferred to a user terminal or an external device in the form of a notification message. For example, processing results may be transferred through an email, a messenger, or output channels of an external system.

The controller 112 of the apparatus 110 for automating cloud building may process the entirety or a portion of the cloud building process on the basis of the received configuration information.

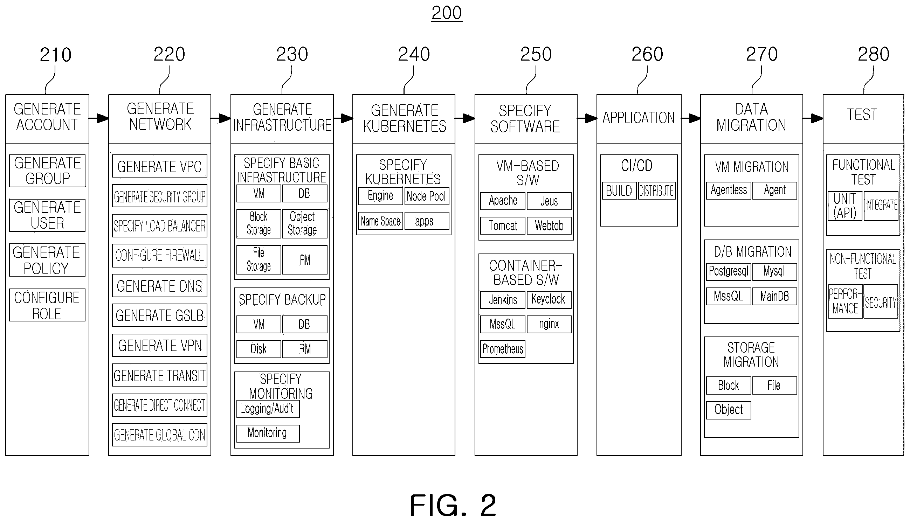

FIG. 2 is diagram illustrating a cloud building process performed in a method for automating cloud building according to an example embodiment.

Referring to the example illustrated in FIG. 2, the cloud building process may include an account generation process 210, a network generation process 220, an infrastructure generation process 230, a cloud configuration process including a Kubernetes generation process 240, a software configuration process 250, an application process 260, a data migration process 270 and a testing process 280.

In the account generation process 210, group generation, user generation, policy generation, and role configuration for using a cloud service provided by the CSP may be performed. In the network generation process 220, network component generation and linkage between components may be performed. In the infrastructure generation process 230, infrastructure resources such as VMs, BMs, storages, or databases may be generated. In the Kubernetes generation process 240, a Kubernetes cluster may be generated when a container execution environment is required. In the software configuration process 250, software necessary for providing a cloud service may be installed or distributed. In the application process 260, a work of building a developed application and storing the application in a registry or distributing the application may be performed. In the data migration process 270, VMs, BMs, databases, and storages may be migrated. In the testing process 280, a test of verifying a cloud migrating or building process may be performed.

The plurality of processes may include one or more sub-processes, and each sub-process may consist of one or more works.

For example, the account generation process 210 may include one or more sub-processes or one or more works for group generation, user generation, policy generation, and role configuration.

The controller 112 may perform the entirety or a portion of the cloud building process on the basis of the received configuration information. For example, the controller 112 may extract a process corresponding to the received configuration information and may selectively process only the extracted process.

The storage portion 113 of the apparatus 110 for automating cloud building may be configured as a module for storing various programs for implementing functions performed by the controller 112 described above.

Also, the storage portion 113 may store received configuration information and a code of the cloud building process.

The controller 112 may perform the entirety or a portion of the cloud building process using at least a portion of code stored in the storage portion 113 on the basis of the received configuration information.

Security information included in the configuration information received from the storage portion 113 may be encrypted and stored. The security information may include, for example, one or more of personal information, a password, a key file, and a certificate file.

In an example embodiment, the controller 112 may periodically identify whether the configuration information stored in the storage portion 113 is updated, and when the update of the configuration information is confirmed, the entirety or a portion of the cloud building process may be performed.

The communication portion 114 of the apparatus 110 for automating cloud building may transmit various types of data to and may receive various types of data from an external server or an external device including the CSP 120 and the cloud resources 130 under control of the controller 112.

For example, the communication portion 114 may receive configuration information received from a user terminal. Also, the communication portion 114 may receive a result of testing the cloud resources 130. Also, the communication portion 114 may transmit a result of performing the cloud building process to an external device.

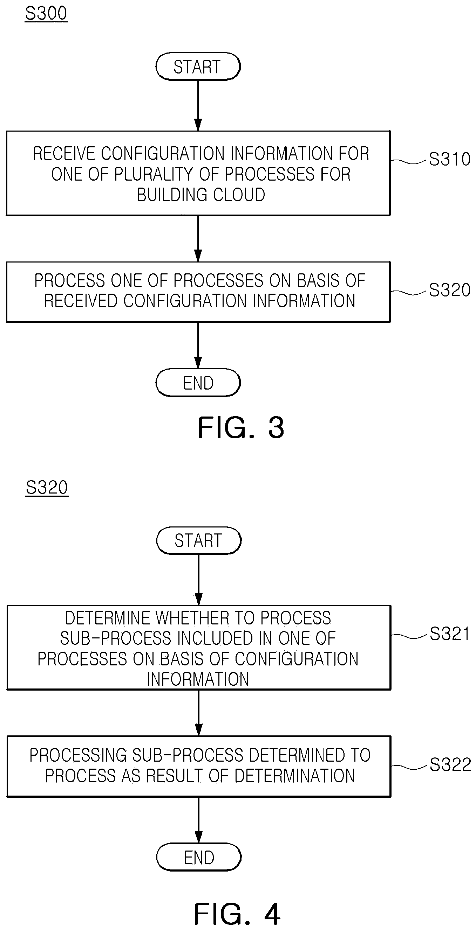

Hereinafter, a method for automating cloud building performed in the apparatus 110 for automating cloud building according to an example embodiment will be described in greater detail with reference to FIGS. 3 to 9.

FIGS. 3 and 4 are a flowchart illustrating a method for automating cloud building according to an example embodiment.

Referring to FIG. 3, a method S300 for automating cloud building according to an example embodiment may include receiving configuration information for one of a plurality of processes for building a cloud (S310) and processing one of processes on the basis of the received configuration information (S320).

Referring to FIG. 4, the processing one of the processes (S320) may include determining whether to process a sub-process included in one of the processes on the basis of configuration information (S321), and processing a sub-process determined to process as a result of the determination in S321 (S322).

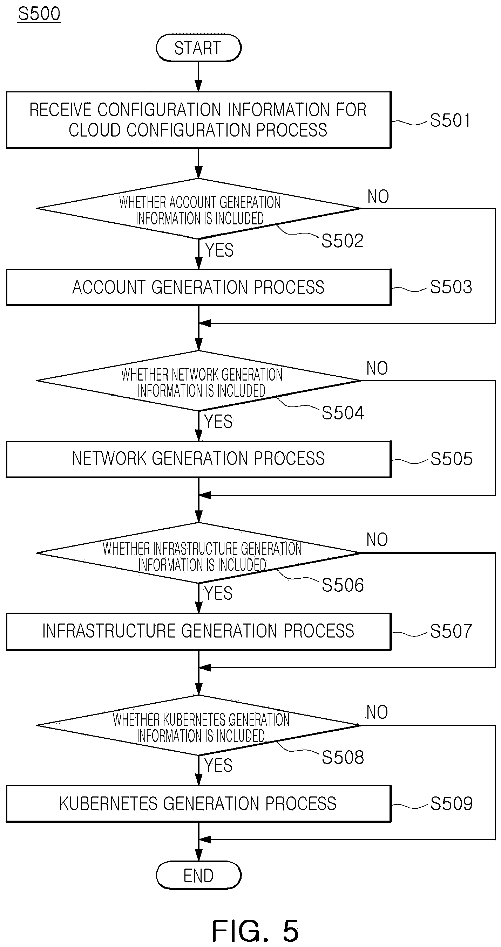

FIG. 5 is a flowchart illustrating a flowchart illustrating a cloud configuration process performed in a method for automating cloud building according to an example embodiment. The cloud configuration process may include, for example, an account generation process, a network generation process, an infrastructure generation process and a Kubernetes generation process.

The apparatus 110 for automating cloud building may receive configuration information, may extract information included in the configuration information from among account generation information, network generation information, infrastructure generation information and Kubernetes generation information, and may determine to process the process corresponding to the extracted information.

For example, when initial configuration information for cloud building is input, the initial configuration information may include the entirety of account generation information, network generation information, infrastructure generation information, and Kubernetes generation information. Accordingly, when initial configuration information is received, the apparatus 110 for automating cloud building may perform the entirety of the account generation process, the network generation process, the infrastructure generation process and the Kubernetes generation process.

Also, the apparatus 110 for automating cloud building may generate cloud resources when the initial configuration information is received. Also, the apparatus 110 for automating cloud building may change cloud resources when receiving configuration changing information for changing previous configuration information rather than the initial configuration information.

The apparatus 110 for automating cloud building may generate, change, or delete the cloud resources using an API, CLI, or Terraform script provided by the CSP 120.

Referring to FIG. 5 in detail, the method for automating cloud building S500 according to the example embodiment may include operation S501 of receiving configuration information for a cloud configuration process.

The apparatus 110 for automating cloud building may determine whether the configuration information received in operation S501 includes account generation information (S502). The apparatus 110 for automating cloud building may perform an account generation process S503 when the configuration information includes account generation information, and the apparatus 110 may skip the account generation process S503 and may perform subsequent operation S504.

The apparatus 110 for automating cloud building may determine whether the configuration information received in operation S501 may include network generation information (S504). The apparatus 110 for automating cloud building may perform network generation process S505 when the configuration information includes network generation information, and when configuration information does not include network generation information, the apparatus 110 may skip the network generation process S505 and may perform subsequent operation S506.

The apparatus 110 for automating cloud building may determine whether the configuration information received in operation S501 includes infrastructure generation information (S506). The apparatus 110 for automating cloud building may perform infrastructure generation process S507 when the configuration information includes infrastructure generation information, and when the configuration information does not include infrastructure generation information, the apparatus 110 may skip the infrastructure generation process S507 and may perform subsequent operation S508.

The apparatus 110 for automating cloud building may determine whether the configuration information received in operation S501 may include Kubernetes generation information (S508). The apparatus 110 for automating cloud building may perform Kubernetes generation process S509 when the configuration information includes Kubernetes generation information, and when the configuration information does not include Kubernetes generation information, the apparatus 110 may skip the Kubernetes generation process S509 and may terminate the method S500.

In the method S500, the apparatus 110 for automating cloud building may preferentially perform determining whether the configuration information received in the operation S501 includes account generation information, network generation information, infrastructure generation information, and Kubernetes generation information. That is, operations S502, S504, S506 and S508 may be preferentially performed after the operation S501 of receiving configuration information, and the process corresponding to information included in the configuration information may be processed according to a result of the determination of operations S502, S504, S506 and S508.

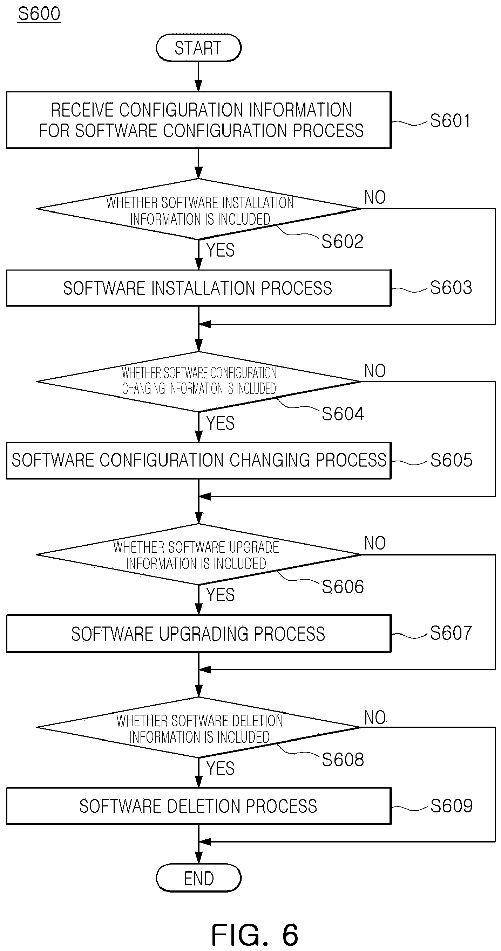

FIG. 6 is a flowchart illustrating a flowchart illustrating a software configuration process performed in a method for automating cloud building according to an example embodiment. The software configuration process may include, for example, a software installation process, a software configuration changing process, a software upgrading process and a software deleting process.

The apparatus 110 for automating cloud building may receive configuration information, may extract a process corresponding to the configuration information, and may determine to process the extracted process.

For example, the apparatus 110 for automating cloud building may access cloud resources 130 as a process target on the basis of the received configuration information. The apparatus 110 for automating cloud building may process at least one of a software installation process, a software configuration changing process, a software upgrading process and a software deleting process with respect to the accessed cloud resources 130.

In another example, the apparatus 110 for automating cloud building may distribute software to containers on the basis of the received configuration information.

Also, the apparatus 110 for automating cloud building may perform a software configuration process including at least one of agent installation for security configuration, logging, and monitoring on the basis of the received configuration information.

Referring to FIG. 6, the method for automating cloud building S600 according to the example embodiment may include an operation S601 of receiving configuration information for a software configuration process.

The apparatus 110 for automating cloud building may determine whether the configuration information received in operation S601 includes software installation information (S602). The apparatus 110 for automating cloud building may perform software installation process S603 when configuration information includes software installation information, and when the configuration information does not include software installation information, the apparatus 110 may skip the software installation process S603 and may perform subsequent operation S604.

The apparatus 110 for automating cloud building may determine whether the configuration information received in operation S601 includes software configuration changing information (S604). The apparatus 110 for automating cloud building may perform software configuration changing process S605 when the configuration information includes software configuration changing information, and when the configuration information does not include software configuration changing information, the apparatus 110 may skip the software configuration changing process S605 and may perform subsequent operation S606.

The apparatus 110 for automating cloud building may determine whether the configuration information received in operation S601 may include software upgrade information (S606). The apparatus 110 for automating cloud building may perform software upgrading process S607 when the configuration information includes software upgrade information, and when the configuration information does not include software upgrade information, the apparatus 110 may skip software upgrading process S607 and may perform subsequent operation S608.

The apparatus 110 for automating cloud building may determine whether the configuration information received in operation S601 includes software deletion information (S608). The apparatus 110 for automating cloud building may perform software deletion process S609 when the configuration information includes software deletion information, and when the configuration information does not include software deletion information, the apparatus 110 may skip the software deleting process S609 and may terminate the method S600.

In method S600, the apparatus 110 for automating cloud building may preferentially perform determining whether the configuration information received in operation S601 includes software installation information, software configuration changing information, software update information, and software deletion information. That is, operations S602, S604, S606 and S608 may be preferentially performed after the operation S601 of receiving configuration information, and the process corresponding to the information included in the configuration information according to a result of the determination of the operations S602, S604, S606 and S608 may be performed.

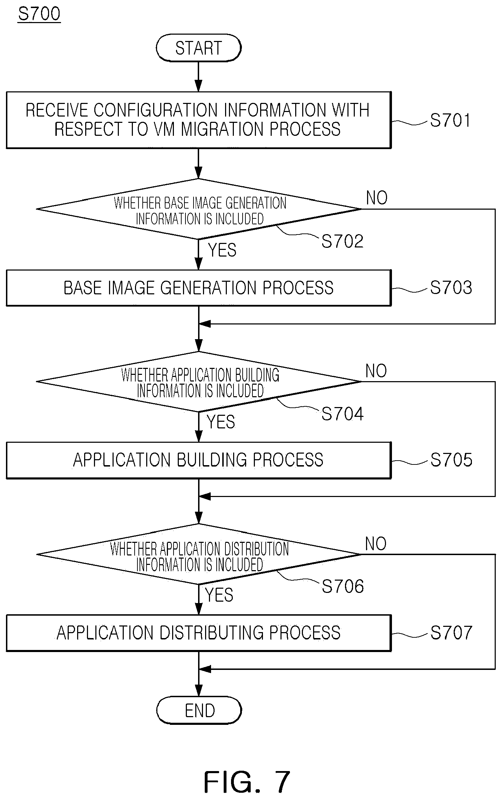

FIG. 7 is a flowchart illustrating an application process performed in a method for automating cloud building according to an example embodiment. The application process may include, for example, an application building process and an application distributing process.

Referring to FIG. 7, a method for automating cloud building S700 according to an example embodiment may include operation S701 of receiving configuration information about an application process.

The apparatus 110 for automating cloud building may determine whether the configuration information received in operation S701 includes base image generation information (S702). The apparatus 110 for automating cloud building may perform base image generation process S703 when the configuration information includes base image generation information, and when the configuration information does not include base image generation information, the apparatus 110 may skip the base image generation process S703 and may perform subsequent operation S704.

The apparatus 110 for automating cloud building may determine whether the configuration information received in operation S701 includes application building information S704. The apparatus 110 for automating cloud building may perform an application building process S705 when the configuration information includes application building information, and when configuration information does not include application building information, the apparatus 110 may skip the application building process S705 and may perform a subsequent operation S706.

The apparatus 110 for automating cloud building may determine whether the configuration information received in operation S701 includes application distribution information (S706). The apparatus 110 for automating cloud building may perform application distributing process S707 when the configuration information includes application distribution information, and when the configuration information does not include application distribution information, the apparatus 110 may skip the application distributing process S707 and may terminate the method S700.

In the method S700, the apparatus 110 for automating cloud building may preferentially perform an operation of determining whether the configuration information received in operation S701 includes base image generation, application building information, or application distribution information. That is, operations S702, S704 and S706 may be preferentially performed after operation S701 of receiving configuration information, and a process corresponding to information included in configuration information may be processed according to a result of the determination of operations S702, S704 and S706.

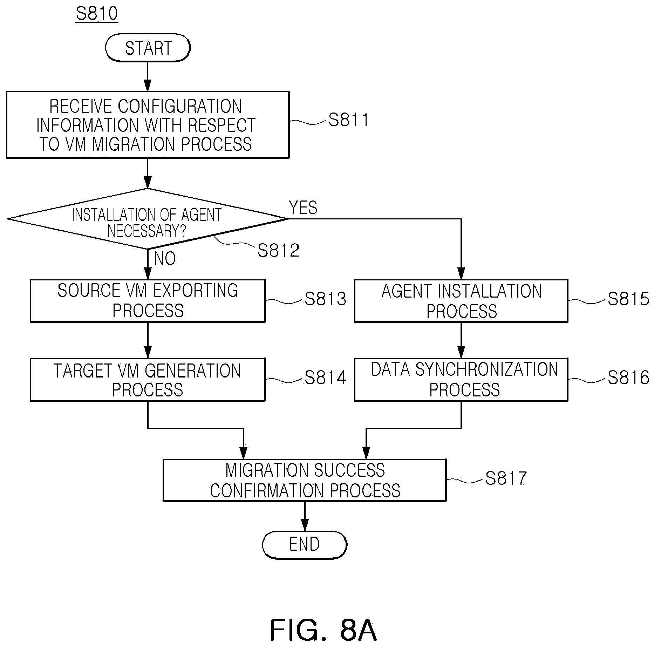

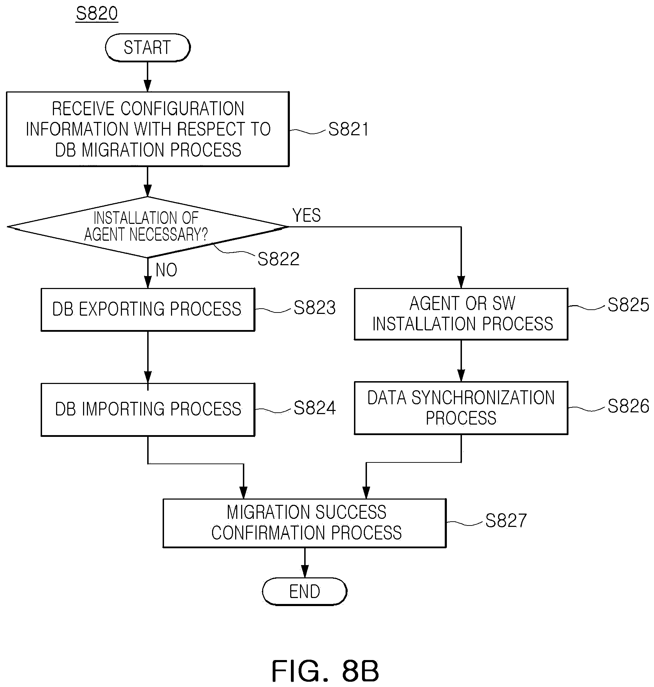

FIGS. 8A and 8B are flowcharts illustrating a process of data migration performed in a method for automating cloud building according to an example embodiment.

Data may include at least one of VM, DB and storage.

The data migration process may be performed by one of an export/import method in which data is downloaded and imported to a target based on configuration information or a synchronization method in which data is copied in real time using an agent or software.

FIG. 8A is a flowchart illustrating a VM migration process performed in the method for automating cloud building according to an example embodiment.

Referring to FIG. 8A, the method for automating cloud building S810 according to the example embodiment may include an operation S811 of receiving configuration information with respect to a VM migration process.

The apparatus 110 for automating cloud building may determine whether the configuration information received in operation S811 requires installation of a migration process agent (S812).

The apparatus 110 for automating cloud building may perform the source VM exporting process (S813) when the configuration information does not require agent installation, and the apparatus 110 may perform a target VM generation process S814 of generating the target VM using the exported VM image, and may perform a migration success confirmation process S817 thereafter.

The apparatus 110 for automating cloud building may perform an agent installation process S815 on the source VM and the target VM when configuration information requires agent installation, and the apparatus 110 may perform data synchronization process S816 using an agent, and may perform a migration success confirmation process S817 thereafter.

FIG. 8B is a flowchart of a DB migration process performed in the method for automating cloud building according to example embodiment.

Referring to FIG. 8B, the method for automating cloud building S820 according to the example embodiment may include an operation S821 for receiving configuration information with respect to a DB migration process.

The apparatus 110 for automating cloud building may determine whether the configuration information received in operation S821 requires installation of an agent for the migration process (S822).

The apparatus 110 for automating cloud building may performs a DB exporting process S823 for downloading exported DB and a DB importing process S824 for importing downloaded DB to a target DB when configuration information does not require agent installation, and may perform a migration success confirmation process S827 thereafter.

The apparatus 110 for automating cloud building may perform an agent or SW installation process S825 for data synchronization in a source DB and a target DB when configuration information requires agent installation, and the apparatus 110 may perform a data synchronization process S826 and may perform the migration success confirmation process S827 thereafter.

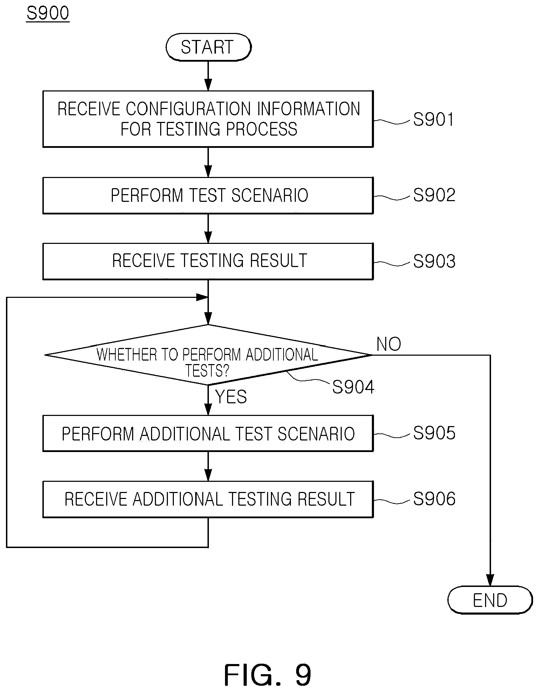

FIG. 9 is a flowchart illustrating a testing process performed in a method for automating cloud building according to an example embodiment.

The apparatus 110 for automating cloud building may access cloud resources 130, which may be a test target, on the basis of the received configuration information, may perform a test scenario for the cloud resources 130, and may receive a testing result from the cloud resources 130.

Referring to FIG. 9, a method for automating cloud building S900 according to an example embodiment may include operation S901 of receiving configuration information for a testing process.

The configuration information for the testing process may include, for example, information on whether additional tests are performed according to a test target, a test scenario, and a testing result.

The apparatus 110 for automating cloud building may perform a test scenario according to the configuration information received in operation S901 (S902) and may receive a testing result (S903).

The apparatus 110 for automating cloud building may determine whether to perform an additional test according to the testing result received in operation S903 (S904).

When an additional test is performed, the apparatus 110 for automating cloud building may perform an additional test scenario (S905) and may receive an additional testing results (S906).

The apparatus 110 for automating cloud building may determine whether to perform additional tests again according to the additional testing result received in operation S906 (S904), and may perform additional tests again according to the result of the determination (S905 and S906).

The apparatus 110 for automating cloud building may terminate the method S900 when additional tests are not performed.

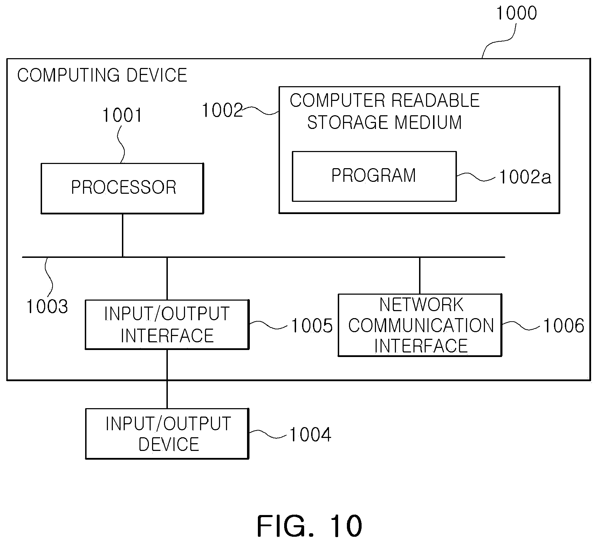

FIG. 10 is a block diagram illustrating a computing device which may fully or partially implement an apparatus for automating cloud building according to an example embodiment of the present disclosure, which may correspond to the apparatus 110 for automating cloud building.

As illustrated in FIG. 10, a computing device 1000 may include at least one processor 1001, a computer readable storage medium 1002 and a communication bus 1003.

The processor 1001 may allow the computing device 1000 to operate as in the aforementioned example embodiment. For example, the processor 1001 may execute one or more programs stored in the computer readable storage medium 1002. The one or more programs may include one or more computer executable commands, and the computer executable commands may be configured to allow the computing device 1000 to perform operations according to the example embodiment when executed by the processor 1001.

The computer readable storage medium 1002 may be configured to store computer executable commands to program code, program data, and/or other suitable forms of information. A program 1002a stored in a computer readable storage medium 1002 may include a collection of instructions executable by the processor 1001.

In an example embodiment, the computer readable storage medium 1002 may be implemented as a memory (a volatile memory such as a random access memory, a nonvolatile memory, or a suitable combination thereof), one or more magnetic disk storage devices, optical disk storage devices, flash memory devices, other types of storage media accessible by the computing device 1000 and storing desired information, or a suitable combination thereof.

The communication bus 1003 may interconnect various other components of the computing device 1000, including the processor 1001 and the computer readable storage medium 1002.

The computing device 1000 may also include one or more input/output interfaces 1005 and one or more network communication interfaces 1006 providing interfaces for the one or more input/output devices 1004. The input/output interface 1005 and the network communication interface 1006 may be connected to the communication bus 1003.

The input/output device 1004 may be connected to other components of the computing device 1000 through the input/output interface 1005. Examples of the input/output device 1004 may include a pointing device (such as a mouse or trackpad), a keyboard, a touch input device (such as a touchpad or touchscreen), a voice or sound input device, an input device such as various types of sensor devices and/or imaging devices, and/or an output device such as a display device, a printer, a speaker and/or a network card. The example input/output device 1004 may be included in the computing device 1000 as a component included in the computing device 1000, or may be connected to the computing device 1000 as a device distinct from the computing device 1000.

The example embodiments may include a program for performing the methods described herein on a computer, and a computer-readable recording medium including the program. The computer readable recording medium may include program instructions, local data files, local data structures, or the like, alone or in combination. The media may be specially designed and configured for the example embodiments, or may be commonly available in the field of computer software. Examples of the computer readable media may include magnetic media such as a hard disk, a floppy disk and a magnetic tape, optical media such as a CD-ROM and DVD, and a hardware device specially configured to store and execute program instructions, such as a ROM, a RAM, a flash memory. Examples of the program may include machine language codes generated by a compiler, and also high-level language codes executed by a computer using an interpreter.

According to the aforementioned example embodiments, by automating a cloud building work, overall work quality may uniformly improve, read time may be shortened, input manpower and cost may be reduced, and a risk caused by correction or change of the work may be reduced.

While the example embodiments have been illustrating and described above, it will be configured as apparent to those skilled in the art that modifications and variations may be made without departing from the scope in the example embodiment as defined by the appended claims.

## Claims

1. A method performed in a computing device including a processor and a storage medium in which one or more programs configured to be executable by the processor are written, the method comprising:
receiving configuration information for one of a plurality of processes for building a cloud; and
processing one of the processes based on the received configuration information,
wherein the plurality of processes includes one or more sub-processes, and
wherein the processing one of the processes includes:
determining whether to process a sub-process included in one of the processes based on the configuration information, and
processing a sub-process determined to be processed as a result of the determination.

2. The method of claim 1, wherein the plurality of processes include a cloud configuration process, a software configuration process, an application process, a data migration process and a testing process.

3. The method of claim 2,
wherein a sub-process of the cloud configuration process includes an account generation process, a network generation process, an infrastructure generation process and a Kubernetes generation process,
wherein, when first configuration information for the cloud configuration process is received in the receiving the configuration information, the determining whether to process a sub-process includes:
extracting information included in the first configuration information from among account generation information, network generation information, infrastructure generation information, and Kubernetes generation information; and
processing determining the sub-process corresponding to the extracted information.

4. The method of claim 3,
wherein the processing one of the processes further includes:
generating cloud resources when the first configuration information is initial configuration information, and
changing the cloud resources when the first configuration information is configuration changing information for changing previous configuration information.

5. The method of claim 2,
wherein the sub-process of the software configuration process includes a software installation process, a software configuration changing process, a software upgrading process and a software deleting process,
wherein, when second configuration information for the software configuration process is received in the receiving the configuration information, the determining whether to process a sub-process includes:
extracting a sub-process corresponding to the second configuration information from among the software installation process, the software configuration changing process, the software upgrading process and the software deleting process; and
determining to process the extracted sub-process.

6. The method of claim 5, wherein the processing a sub-process includes:
accessing a cloud resource, which is a process target, based on the second configuration information; and
processing the extracted sub-process for the accessed cloud resource

7. The method of claim 2,
wherein the sub-process of the application process includes an application building process and an application distributing process,
wherein, when third configuration information for the application process is received in the receiving the configuration information, the determining whether to process a sub-process includes:
extracting a sub-process corresponding to the third configuration information from among the application building process and the application distributing process; and
determining to process the extracted sub-process.

8. The method of claim 2,
wherein a sub-process of the data migration process includes a target generation process, an exporting process, an importing process, an agent installation process, a data synchronization process and a migration success confirmation process, and
wherein when the fourth configuration information for the data migration process is received in the receiving the configuration information, the determining whether to process a sub-process includes:
determining whether downtime is acceptable based on the fourth configuration information; and
extracting a sub-process based on the result of the determination.

9. The method of claim 8, wherein, when the fourth configuration information is information about virtual machine migration, the extracting a sub-process includes extracting the target generation process when downtime is acceptable as a result of the determination, and extracting the agent installation process when downtime is unacceptable.

10. The method of claim 8, wherein, when the fourth configuration information is about database migration or storage migration, the extracting a sub-process includes:
extracting the exporting process and the importing process when downtime is acceptable as a result of the determination, and extracting the agent installation process when downtime is unacceptable.

11. The method of claim 2, wherein, when fifth configuration information for the testing process is received in the receiving the configuration information, the fifth configuration information includes information on whether additional tests are performed according to a test target, a test scenario, and a testing result.

12. The method of claim 11, wherein the processing a sub-process includes:
accessing a test target cloud resource based on the fifth configuration information;
performing the test scenario with respect to the cloud resources; and
receiving a testing result from the cloud resources.

13. The method of claim 12, wherein the processing a sub-process further includes determining whether to perform additional tests based on the fifth configuration information after receiving the testing result.

14. The method of claim 1, further comprising:
outputting a processing result of the sub-process as a notification message after the processing a sub-process.
